# EUROPÄISCHE PATENTANMELDUNG

(11) **EP 0 771 828 A2**
(43) Veröffentlichungstag der Anmeldung: **07.05.1997**
(21) Anmeldenummer: 96116996.8
(22) Anmeldetag: 23.10.1996
(51) Int. Cl.: C08G 18/40, C08J 11/24

(54) **Unter Einsatz von Recycling-Polyolen hergestellte Polyurethan-Formkörper, ein Verfahren zu deren Herstellung sowie deren Verwendung**

(30) Priorität: 03.11.1995 DE 19540950
(71) Anmelder: BAYER AG, 51368 Leverkusen (DE)
(72) Erfinder: Lammeck, Adolf, 53797 Lohmar (DE); Rasshofer, Werner, Dr., 51061 Köln (DE)

(57) **Zusammenfassung**

Beschrieben werden Polyurethan-Formkörper aus der Umsetzung von Polyisocyanaten mit durch chemische Spaltung von Polyurethan- und/oder Polyharnstoffabfällen gewonnenen Polyolverbindungen, welche eine OH-Zahl im Bereich von 100 bis 500, einen Wassergehalt von 0 bis 5 Gew.-% und eine Viskosität bei 20°C von mehr als 2 000 mPa.s aufweisen. Bevorzugt sind diese Polyurethan-Formkörper in Sandwichbauweise aufgebaut, wobei sie neben einem Polyurethan-Kern mindestens eine Deckschicht aus einem gegebenenfalls faserverstärktem Kunststoffmaterial enthalten. Ebenfalls beschrieben wird die Herstellung dieser Polyurethan-Formkörper sowie deren Verwendung im Fahrzeug-, Möbel-, Maschinen- oder Apparatebau.

## Beschreibung

Die Erfindung betrifft Polyurethan-Formkörper, welche unter Verwendung von Recycling-Polyolen hergestellt werden, ein Verfahren zu deren Herstellung sowie deren Verwendung im Fahrzeug-, Möbel-, Maschinen- und Apparatebau.

Polyurethan-Formkörper werden in weiten Teilen der Technik, z.B. im Kfz-Bau in Form von Polyurethan-Integralschaumstoffen oder Polyurethan-Sandwichbauteilen eingesetzt. Für die Fertigung hochwertiger Strukturbauteile für den Fahrzeug- und Karosseriebau, insbesondere den Fahrzeuginnenraum, werden Polyurethan-Formteile üblicherweise in der Sandwichbauweise eingesetzt. Der Stand der Technik kennt dabei im wesentlichen zwei Verfahren, die zur Herstellung von Sandwichbauteilen verwendet werden. Im Depotverfahren (Füllbauweise) werden zwei Halbschalen (Deckschichten) vorgefertigt, in ein Werkzeug eingelegt und der Hohlraum zwischen den Schalen mit einem PUR-Schaum ausgeschäumt. Weiter kennt man die Hüllbauweise, bei der ein Kern aus einem PUR-Schaum in einem Werkzeug vorgelegt und mit einem geeigneten Hüllmaterial aus z.B. faserverstärkten Kunststoffen wie Epoxyharzen oder ungesättigten Polyesterharzen umhüllt wird.

Bei der Herstellung von Polyurethan-Formkörpern, z.B. als hochwertige Strukturbauteile für den Fahrzeug- und Karosseriebau, sind aus Polyurethan- oder Polyharnstoffabfällen zurückgewonnene Polyolverbindungen bisher kaum eingesetzt worden.

Es bestand daher die Aufgabe, ein Verfahren zur Herstellung von Polyurethan-Formkörpern zur Verfügung zu stellen, bei dem aus Polyurethan- oder Polyharnstoffabfällen zurückgewonnene Polyolverbindungen eingesetzt werden können.

Es wurde nun gefunden, daß auch mit aus Polyurethan- oder Polyharnstoffabfällen zurückgewonnenen Polyolverbindungen hochwertige Polyurethan-Formkörper erhalten werden können, wenn diese eingesetzten Polyolverbindungen bestimmte Spezifikationen erfüllen.

Gegenstand der Erfindung sind daher Polyurethan-Formkörper, welche durch die Umsetzung von Polyisocyanaten mit durch chemische Spaltung von Polyurethan- oder Polyharnstoffabfällen gewonnenen Polyolverbindungen mit einer OH-Zahl im Bereich von 100 bis 500, einem Wassergehalt von 0 bis 5 Gew.-% und einer Viskosität von mehr als 2000 mPa.s (20°C) erhältlich sind.

Es ist überraschend, daß sich mit Polyolverbindungen dieser Spezifikation überhaupt hochwertige Polyurethan-Formkörper herstellen lassen, da nach dem bisher bekannten Stand der Technik bisher immer Polyole mit einer weit höheren OH-Zahl, meist im Bereich von 300 bis 1 000, und einer wesentlich niedrigeren Viskosität, meist im Bereich von <2000 mPa.s (20°C), eingesetzt werden mußten. Diese Spezifikation wird immer erreicht, indem man die durch chemische Spaltung von Polyurethan- oder Polyharnstoffabfällen gewonnenen Recycling-Polyole durch nachfolgend näher benannte Zusatzmittel auf die angegebene Spezifikation einstellt.

Vorzugsweise besitzen die erfindungsgemäßen Polyurethan-Formkörper eine Dichte im Bereich von 50 bis 1500 kg/m³.

Die erfindungsgemäßen Polyurethan-Formkörper können sowohl als geschäumte oder massive Formartikel, vorzugsweise als geschäumte Formkörper vorliegen.

Besonders bevorzugt liegen die erfindungsgemäßen Polyurethan-Formkörper als Verbundkörper vor, die neben einem Polyurethan-Kern auf Basis der Recycling-Polyole in Sandwichbauweise mindestens eine weitere Deckschicht aus einem Kunststoffmaterial, vorzugsweise Epoxyharzen oder ungesättigten Polyesterharzen, enthalten. Bevorzugt besteht die Deckschicht aus faserverstärktem Kunststoffmaterial. Als gebundene Fasermaterialien kommen dabei alle an sich bekannten faserförmigen Verstärkungsstoffe wie z.B. Naturfasern, Glasfasern, Kohlenstoffasern oder andere Polymerfasern in Form von Wirrfasern, Gewirken, Gestricken oder Geweben in Betracht. Diese Faserstoffe können an sich bekannterweise durch Epoxy-ungesättigte Polyester-, PUR-, Melamin-, Vinylharzen oder auch thermoplastischen Pulvern verstärkt sein. Diese Bindemittel können durch Sprühen, Walzen, Rakeln und Gießen auf- und eingebracht werden und können im Falle der Verwendung von PUR-Harzen auch PUR-Recyclate enthalten.

Zweckmäßigerweise bestehen die erfindungsgemäßen Polyurethan-Formkörper als Verbundkörper in Sandwichbauweise aus einer Deck- oder Hüllschicht A, bestehend aus faserverstärktem Kunststoffmaterial, einer Kernschicht B, bestehend aus einem Polyurethanschaum auf Basis der Recycling-Polyole, sowie gewünschtenfalls aus einer weiteren Schicht, die entweder wie Schicht A aufgebaut ist oder aus einem anderen Material bestehen kann. Dekormaterialien wie Folien, Formhäute, Textilien oder Teppich können direkt auf den äußeren Oberflächen der Deckschichten in an sich bekannter Weise hinterpreßt werden (Direktkaschierung). Bei multilagigen Sandwichaufbauten können gegebenenfalls auch noch weitere, andere Schichten aus anderen Materialien Verwendung finden.

Ein weiterer Gegenstand der Erfindung sind die Polyolverbindungen, welche zur Herstellung von Polyurethan-Formkörpern eingesetzt werden, die durch chemische Spaltung von Polyurethan- und/oder Polyharnstoffabfällen gewonnen wurden und eine OH-Zahl im Bereich von 100 bis 500, vorzugsweise 200 bis 450, insbesondere 250 bis 400, einen Wassergehalt von 0 bis 5 Gew.-%, vorzugsweise 0,2 bis 2 Gew.-%, insbesondere 0,5 bis 1 Gew.-%, und eine Viskosität von mehr als 2 000 mPa.s (200°C), vorzugsweise 3 000 bis 20 000 mPa.s, insbesondere 5 000 bis 10 000 mPa.s, besitzen.

Als Polyurethan- bzw. Polyharnstoffabfälle zur Herstellung der verwendeten Polyolverbindungen können alle üblichen Umsetzungsprodukte aus der Reaktion zwischen einem Isocyanat und üblichen Di- und/oder Polyolen, z.B. Polyestern oder Polyethern, dienen.

Ein weiterer Gegenstand der Erfindung ist ein Verfahren zur Herstellung von Polyurethan-Formkörpern durch Umsetzung von Polyisocyanaten mit Polyolverbindungen sowie gegebenenfalls weiteren Hilfs- und Zusatzstoffen, bei dem man durch chemische Spaltung von Polyurethan- und/oder Polyharnstoffabfällen gewonnene Polyolverbindungen mit einer OH-Zahl im Bereich von 100 bis 500, vorzugsweise 200 bis 450, insbesondere 250 bis 400, einen Wassergehalt von 0 bis 5 Gew.-%, vorzugsweise 0,2 bis 2 Gew.-%, insbesondere 0,5 bis 1 Gew.-% und einer Viskosität bei 20°C von mehr als 2 000 mPa.s, vorzugsweise 3 000 bis 20 000 mPa.s, insbesondere 5 000 bis 10 000, einsetzt.

Erfindungsgemäß können geschäumte oder massive Formkörper oder bevorzugt Formkörper in Sandwichbauweise hergestellt werden.

Im erfindungsgemäßen Verfahren können alle an sich bekannten Hilfs- und Zusatzstoffe wie z.B. Trennmittel, Treibmittel, Füllstoffe, Katalysatoren und Flammschutzmittel eingesetzt werden.

Für den Fall, daß geschäumte Formkörper hergestellt werden sollen, kann in an sich bekannter Weise das Reaktionsgemisch in eine Form eingetragen werden. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß der Formkörper eine kompakte Haut und einen zelligen Kern aufweist (Integralschaumstoffe).

Bevorzugt wird das erfindungsgemäße Verfahren für die Herstellung von Polyurethan-Verbundkörpern in Sandwichbauweise durchgeführt. Das erfindungsgemäße Verfahren kann dabei sowohl als Depot- oder Hüllbauverfahren ausgestaltet sein. Sowohl die Depotbauweise als auch die Hüllbauweise sind an sich bekannt. Im Depotverfahren (Füllbauweise) werden zwei Halbschalen (z.B. Deckschichten aus faserverstärkten Kunststoffen) vorgefertigt, in ein Werkzeug eingelegt und der Hohlraum zwischen den Schalen mit dem erfindungsgemäßen PUR-Schaum ausgeschäumt. In der Hüllbauweise wird ein Kern aus erfindungsgemäßem PUR-Schaum in einem Werkzeug vorgelegt und dann mit einem geeigneten Hüllmaterial, z.B. mit faserverstärkten Epoxyharzen oder ungesättigten Polyesterharzen, umhüllt. Bei der Herstellung der erfindungsgemäßen Sandwich-Verbundkörper ist die Hüllbauweise bevorzugt.

In einer speziellen vorteilhaften Ausgestaltung des erfindungsgemäßen Verfahrens werden geschäumte PUR-Kerne in Sandwichbauweise nach der Hüllbauweise unter Verwendung der Recycling-Polyolverbindungen hergestellt. Hierfür können gewünschtenfalls alle an sich üblichen Treibmittel und Hilfsstoffe, z.B. Trennmittel, zugesetzt werden. Wird bei dieser erfindungsgemäßen Herstellung eines PUR-Sandwichformkörpers nach der Hüllbauweise in einem Formwerkzeug kein externes Trennmittel eingesetzt, so wird ein besonders kraftschlüssiger Verbund zwischen Kern- und Hüllmaterial ohne die Notwendigkeit der Nachbearbeitung oder Vorbereitung von Hüll- und/oder Kernschicht erreicht. Als Hüllschicht können dabei alle an sich bekannten gewünschtenfalls faserverstärkten Kunststoffmaterialien verwendet werden.

Die im erfindungsgemäßen Verfahren eingesetzten Polyole können aus beliebigen Polyurethan- bzw. Polyharnstoffabfällen, z.B. auch aus Polyurethan- bzw. Polyharnstoffverbünden durch chemische Spaltung gewonnen werden. Diese Verbundstoffe können aus PUR und anderen Werkstoffen wie z.B. Thermoplasten bestehen, wobei vor dem PUR-Recycling das Nicht-PUR-Material weitgehend abgetrennt werden muß. Ein solcher Verbundstoff kann z.B. eine Kfz-Schalttafel aus einem glasmattenverstärkten PUR-Träger, einem griffweichen PUR-Schaum als Hinterfüllmaterial oder einer aliphatischen PUR-Haut als Dekor- und Abdeckschicht bestehen.

Die Verfahren zur chemischen Aufspaltung von Polyurethan- und/oder Polyharnstoffabfällen in Polyolverbindungen sind alle an sich bekannt. So können die Polyurethan- und/oder Polyharnstoffabfälle z.B. durch Aminolyse-, Alkoholyse- oder Glykolyse-Verfahren erhalten werden. Derartige Verfahren sind nach dem Stand der Technik bereits ausführlich beschrieben (z.B. in W. Raßhofer, Recycling von Polyurethan-Kunststoffen, Hüthig-Verlag, Heidelberg 1994).

Bevorzugt werden die Polyolverbindungen aus Polyurethan- und/oder Polyharnstoffabfällen auf an sich bekannte Weise durch Glykolyse gewonnen. Hierfür werden grobgemahlene oder feinzerkleinerte Polyurethan- oder Polyharnstoffabfälle bei Temperaturen von 160 bis 240°C mit Glykolen, vorzugsweise Diethylenglykol, im Gewichtsverhältnis Abfall : Glykol von 10:1 bis 1:2, bevorzugt 5:1 bis 1:1 umgesetzt. Nach einer Rührzeit von ca. 0,5 bis 10 Stunden erhält man ein flüssiges Produkt mit der folgenden Spezifikation: OH-Zahl im Bereich von 20 bis 1070, Wassergehalt im Bereich von 0 bis 5 Gew.-%, Viskosität bei 20°C im Bereich von >2 000 mPa.s. Bei sehr hoher OH-Zahl kann die Viskosität auch bei < 2000 mPas (20°C) liegen.

Da die aus der chemischen Spaltung der Polyurethan- und/oder Polyharnstoffabfällen gewonnenen Polyolverbindungen üblicherweise in ihren Verarbeitungseigenschaften nicht den für die industrielle Herstellung von Polyurethan-Formkörpern geeigneten Anforderungen entsprechen, werden die angegebenen Spezifikationen durch Zumischen von Zusatzmitteln eingestellt. Üblicherweise werden dafür Gemische aus bekannten Additiven wie Vernetzer, Zellstabilisatoren, Fließhilfsmittel, Trennmittel, Katalysatoren, Treibmittel etc. in einem Mengenverhältnis von 2 bis 50 Gew.-%, bezogen auf die bei der Polyurethan-Formkörperherstellung eingesetzte Reaktionsmischung an Recycling-Polyolverbindungen, eingesetzt. Die Zusatzgemische haben üblicherweise OH-Zahlen von 300 bis 1 050 mg KOH/g, Viskositäten von 100 bis 5 000 mPa.s, einem Wassergehalt von 0 bis 10 Gew.-% und Säurezahlen von 0 bis 100 mg KOH/g.

Es ist überraschend, daß durch chemische Spaltung von Polyurethan- und/oder Polyharnstoffabfällen gewonnene, formulierte Polyole der angegebenen Spezifikation sich überhaupt zur Herstellung hochwertiger Polyurethan-Formkörper, insbesondere zur Herstellung von Polyurethan-Formkörpern mit Sandwichstruktur eignen, da üblicherweise bei der Verwendung von Neumaterial die eingesetzten Polyole eine wesentlich höhere OH-Zahl im Bereich von über 500 bis 1 000 aufweisen müssen. Auch die Viskosität der nach dem Stand der Technik eingesetzten Polyolverbindungen liegt üblicherweise wesentlich niedriger, zumeist im Viskositätsbereich von <2 000 mPa.s (20°C). Daß sich aus Polyurethan- und/oder Polyharnstoffabfällen gewonnene Polyolverbindungen sich trotz ihrer weit höheren Viskosität und wegen ihrer niedrigeren OH-Zahl geringeren Aktivität dennoch gut zu hochwertigen Polyurethan-Formkörpern verarbeiten lassen, war daher nicht zu erwarten. Die erfindungsgemäßen Polyurethan-Formkörper erlauben die Herstellung hochwertiger Strukturbauteile für die unterschiedlichsten Anwendungsbereiche, die unter Beibehaltung der mechanischen Eigenschaften in vorteilhafter Weise den Einsatz von aus Abfallstoffen recycelten Rohstoffen gestatten.

Die aus der chemischen Spaltung der Polyurethan- und/oder Polyharnstoffabfällen gewonnenen Polyole können mit allen an sich bekannten Polyisocyanaten umgesetzt werden. Als Polyisocyanate können z.B. aliphatische, cycloaliphatische, araliphatische, aromatische und heterocyclische Polyisocyanate, wie sie z.B. von W. Siefgen in Justus Liebigs Annalen der Chemie, 362, Seiten 75 bis 136 beschrieben werden, beispielsweise solche der allgemeinen Formel

Q(NCO)ₙ,

in der
- n: 2 bis 5, vorzugsweise 2 bis 3, und
- Q: einen aliphatischen Kohlenwasserstoffrest mit 2 bis 18, vorzugsweise 6 bis 10 Kohlenstoffatomen, einen cycloaliphatischen Kohlenwasserstoffrest mit 4 bis 15, vorzugsweise 5 bis 10 Kohlenstoffatomen, einen aromatischen Kohlenwasserstoffrest mit 6 bis 15, vorzugsweise 6 bis 13 Kohlenstoffatomen bedeuten, z.B. solche Polyisocyanate, wie sie in der DE-OS 2 832 253, Seiten 10 bis 11, beschrieben werden.

Besonders bevorzug werden in der Regel die technisch leicht zugänglichen Polyisocyanate, z.B. das 2,4- und 2,6-Toluylendiisocyanat, sowie beliebige Gemische dieser Isomeren ("TDI"), Diphenylmethandiisocyanat ("MDI") und Polyphenylpolymethylenpolyisocyanate, wie sie durch Anilin-Formaldehyd-Kondensation und anschließende Phosgenierung hergestellt werden und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. 4,4'- und/oder 2,4'-Diphenylmethandiisocyanat ableiten, eingesetzt.

Ein weiterer Gegenstand der Erfindung ist die Verwendung der vorstehend beschriebenen Polyurethan-Formkörper im Fahrzeug-, Möbel-, Maschinen- und Apparatebau. Vorzugsweise werden erfindungsgemäße Polyurethan-Formkörper mit Sandwichstrinktur im Fahrzeugbau, insbesondere im Kfz-Innenraum verwendet. Neben einem geringen Gewicht bei einer hohen Festigkeit zeichnen sich die erfindungsgemäßen Sandwich-Bauteile dadurch aus, daß sie durch Verwendung von Polyurethanmaterial als Kern und Deckschicht-Matrix-Bindematerial einen besonders niedrigen Gehalt an emittierbaren und extrahierbaren Substanzen aufweisen. Im Kfz-Bereich können sie z.B. als 2- und/oder 3-dimensionale Formkörper, wie z.B. als kaschierfähige Verkleidungsteile oder Abdeckungen, Türinnenverkleidungen, Konsolenträger, Armaturentafelträger, Luftleitkanäle, Kabelabdeckungen, Kabelkanäle und Kofferraumauskleidungen verwendet werden. Weiterhin können sie zu Gehäusen und Gehäusedecken, Paletten, Kleinlastträgern, Abdeckungen, senkrechte und waagerechte Strukturbauteilen, Schottwänden, Einlegeböden usw. verarbeitet werden. Auch im Möbelbereich können die erfindungsgemäßen Polyurethan-Formkörper z.B. als Ersatz von Tropenholz, insbesondere in Form von hieraus hergestellten Schichtholzimitaten, verwendet werden.

Die nachfolgenden Beispiele sollen die Erfindung erläutern, ohne sie jedoch in ihrem Umfang zu begrenzen.

### Beispiele

### Beispiel 1

### Chemische Spaltung von Polyurethanabfällen durch Glykolyse

Ein Granulat einer maximalen Korngröße von 8 mm aus glasfaserverstärktem Polyurethanharnstoff der Dichte 1,26 g/cm³ wurde einer Glykolyse unterworfen. Hierfür wurde in einem mit Rührer und Heizmantel ausgestatteten 20 l-Planschlifftopf 4 kg Diethylenglykol vorgelegt, mit Stickstoff überlagert und auf 220°C vorgeheizt. In das heiße Gemisch wurden portionsweise 8 kg Polyurethanharnstoffgranulat unter Stickstoffüberschleierung eingetragen. Die Zugabe wurde so bemessen, daß jederzeit ein rührfähiges Gemisch vorlag. Nach vollständiger Zugabe des Granulats wurde bei 200 bis 210°C 90 min lang gerührt, auf 160°C abgekühlt, dann mit 0,2 kg Acetessigester gemischt und 1 Stunde bei dieser Temperatur gerührt. Man erhielt ein flüssiges, beim Stehen 2-phasiges Produkt an Recycling-Polyolen mit den folgenden Daten:
OH-Zahl = 353 mg KOH/g
NH-Zahl = 33 mg KOH/g
Säure-Zahl = 0,07 mg KOH/g
Viskosität = ca. 20 000 mPa.s (20°C)

### Beispiel 2

### Herstellung eines erfindungsgemäßen Polyurethan-Formkörpers

Die in Beispiel 1 durch Glykolyse gewonnenen Recycling-Polyole Glykolysat wurden mit einem Zusatzmittelgemisch, das folgende Spezifikation:
OH-Zahl = 400 mg KOH/g
Wassergehalt = 2,6 %
Viskosität = 1 500 mPa.s (20°C)
aufwies, in einer Menge von 25 Gew.-%, bezogen auf die Gesamtmenge, vermischt. Man erhielt eine Polyol-Formulierung der folgenden Spezifikation:
OH-Zahl = ca. 380 mg KOH/g
Wasser-Gehalt = ca. 1 %
Viskosität = ca. 3 500 mPa.s

In an sich bekannter Weise gemäß RIM-Technologie wurde diese Polyol-Formulierung mit Polyisocyanat (Roh-MDI) zu einem geschäumten Polyurethan-Formkörper in an sich bekannter Weise umgesetzt. Ein externes Trennmittel wurde dabei nicht verwendet. Man erhielt einen Polyurethan-Formkörper mit einer Rohdichte von 400 kg/m³.

### Beispiel 3

### Herstellung eines erfindungsgemäßen Polyurethan-Formkörpers in Sandwichbauweise

### Beispiel 3a

Zuerst wurden außerhalb des Werkzeuges Kokosfasermatten mit einem Flächengewicht von 600 g/m² in an sich bekannter Weise mit einem PUR-Matrixmaterial (Baypreg® der Bayer AG) durch Sprühen belegt und imprägniert. Die so erhaltene Deckschicht wurde zur Herstellung eines erfindungsgemäßen Polyurethan-Formkörpers mit Sandwichstruktur eingesetzt.

Ein Werkzeug (Stahl, 120°C, 300 x 300 x 8mm) wurde mit einer Deckschicht, die wie vorstehend beschrieben hergestellt wurde, einem Polyurethan-Kern, wie in Beispiel 2 beschrieben, und einer weiteren Deckschicht belegt und das Werkzeug geschlossen. Nach 2 Minuten bei 120°C und einem Druck von 50 bar wurde ein kraftschlüssiges Sandwichformteil entformt.

### Beispiel 3b

Wie unter Beispiel 3a) beschrieben, wurde ein erfindungsgemäßer Polyurethan-Formkörper mit Sandwichstruktur hergestellt, wobei zusätzlich auf eine der eingesetzten Deckschichten eine an sich bekannte Dekorfolie aus PVC/ABS gelegt wurde und das Werkzeug geschlossen wurde. Nach 2 Minuten bei 120°C und einem Druck von 50 bar wurde ein kraftschlüssiges Sandwichformteil mit zusätzlicher Dekorschicht entformt.

### Beispiel 3c

Wie unter Beispiel 3a) beschrieben, wurde ein erfindungsgemäßer Polyurethan-Formkörper mit Sandwichstruktur hergestellt. Anstelle einer mit Kokosfasermatten verstärkten Deckschicht wurden Deckschichten eingesetzt, die mit Glasfasermatten mit einem Flächengewicht von 450 g/m² hergestellt worden waren. Die Herstellung erfolgte analog der mit Kokosfasermatten verstärkten Deckschicht. Alle erfindungsgemäß hergestellten Sandwich-Formteile zeigten bei guter Formbeständigkeit und Festigkeit einen sehr guten kraftschlüssigen Verbund zwischen Kern- und Deckmaterial.

## Patentansprüche

1. Polyurethan-Formkörper, dadurch gekennzeichnet, daß er durch die Umsetzung von Polyisocyanaten mit durch chemische Spaltung von Polyurethan- und/oder Polyharnstoffabfällen gewonnenen Polyolverbindungen mit einer OH-Zahl im Bereich von 100 bis 500 mg KOH/g, einem Wassergehalt von 0 bis 5 Gew.-% und einer Viskosität bei 20°C von mehr als 2 000 mPa.s erhältlich ist.

2. Polyurethan-Formkörper gemäß Anspruch 1, dadurch gekennzeichnet, daß er eine Dichte im Bereich von 50 bis 1500 kg/m³ besitzt.

3. Formkörper gemäß Anspruch 1 oder 2, dadurch gekennzeichnet, daß er ein geschäumter Formkörper ist.

4. Formkörper gemäß einem der vorhergehenden Ansprüche, dadurch gekennzeichnet, daß er ein Verbundkörper aus einem Polyurethankern und mindestens einer Deckschicht aus einem gegebenenfalls faserverstärkten Kunststoffmaterial ist.

5. Polyolverbindungen zur Herstellung von Polyurethan-Formkörpern, dadurch gekennzeichnet, daß sie durch chemische Spaltung von Polyurethan- und/oder Polyharnstoffabfällen erhältlich sind und eine OH-Zahl im Bereich von 100 bis 500, vorzugsweise 200 bis 450, insbesondere 250 bis 400 mg KOH/g, einen Wassergehalt von 0 bis 5 Gew.-%, vorzugsweise 0,2 bis 2 Gew.-%, insbesondere 0,5 bis 1 Gew.-%, und eine Viskosität bei 20°C von mehr als 2 000 mPa.s, vorzugsweise 3 000 bis 20 000 mPa.s, insbesondere 5 000 bis 10 000 mPa.s, aufweisen.

6. Verfahren zur Herstellung von Polyurethan-Formkörpern durch Umsetzung von Polyisocyanaten mit Polyolverbindungen sowie gegebenenfalls weiteren Hilfs- und Zusatzstoffen, dadurch gekennzeichnet, daß durch chemische Spaltung von Polyurethan- und/oder Polyharnstoffabfällen gewonnene Polyolverbindungen mit einer OH-Zahl im Bereich von 100 bis 500, einem Wassergehalt von 0 bis 5 Gew.-% und einer Viskosität bei 20°C von mehr als 2 000 mPa.s eingesetzt werden.

7. Verfahren nach Anspruch 6, dadurch gekennzeichnet, daß die Polyolverbindungen eine Viskosität bei 20°C im Bereich von 5 000 bis 10 000 mPa.s aufweisen.

8. Verfahren nach Anspruch 6 oder 7, dadurch gekennzeichnet, daß durch Glykolyse von Polyurethan- und/oder Polyharnstoffabfällen gewonnene Polyolverbindungen eingesetzt werden.

9. Verfahren zur Herstellung von Polyurethan-Formkörpern gemäß einem der Ansprüche 6 bis 8, dadurch gekennzeichnet, daß in Sandwichbauweise mindestens eine Deckschicht aus einem gegebenenfalls faserverstärkten Kunststoffmaterial aufgetragen wird.

10. Verwendung der Polyurethan-Formkörper gemäß einem der Ansprüche 1 bis 4 im Fahrzeug-, Möbel-, Maschinen- oder Apparatebau.
